(19) **Europäisches Patentamt**

**European Patent Office**

**Office européen des brevets**

(11) **EP 1 256 028 B1**

(12) **EUROPEAN PATENT SPECIFICATION**

(45) Date of publication and mention
of the grant of the patent:
**09.02.2005 Bulletin 2005/06**

(51) Int Cl.7: $G02B\ 27/00$, G02B 26/08

(21) Application number: **00921538.5**

(22) Date of filing: **30.03.2000**

(86) International application number:
**PCT/US2000/008506**

(87) International publication number:
**WO 2001/075506 (11.10.2001 Gazette 2001/41)**

(54) **BEAM STEERING OPTICAL ARRANGEMENT USING RISLEY PRISMS WITH SURFACE CONTOURS FOR ABERRATION CORRECTION**

OPTISCHE ANORDNUNG ZUR STRAHLSTEUERUNG MIT OBERFLÄCHEN-KONTOURIERTEN RISLEY PRISMEN ZUR KORREKTUR VON ABERRATIONEN

DISPOSITIF OPTIQUE DE GUIDAGE DE FAISCEAU UTILISANT DES PRISMES DE RISLEY A CONTOURS SURFACIQUES POUR CORRIGER DES ABERRATIONS

(84) Designated Contracting States:
**DE FR GB**

(43) Date of publication of application:
**13.11.2002 Bulletin 2002/46**

(73) Proprietor: **Raytheon Company**
**El Segundo, California 90245-0902 (US)**

(72) Inventors:
• **SPARROLD, Scott, W.**
**Tucson, AZ 85718 (US)**
• **MILLS, James, P.**
**Tucson, AZ 85718 (US)**
• **PAIVA, Richard, A.**
**Tucson, AZ 85737 (US)**
• **ARNDT, Thomas, D.**
**Amado, AZ 85645 (US)**
• **ELLIS, Kenneth, S.**
**Tucson, AZ 85730 (US)**

• **KNAPP, David, J.**
**Tucson, AZ 85730 (US)**

(74) Representative: **Jackson, Richard Eric et al**
**Carpmaels & Ransford,**
**43 Bloomsbury Square**
**London WC1A 2RA (GB)**

(56) References cited:
**EP-A- 0 378 886      EP-A- 0 848 273**
**US-A- 4 118 109      US-A- 4 826 287**
**US-A- 5 966 243**

• **MILLS J P ET AL.: "Conformal dome aberration correction with counter-rotating phase plates" PROCEEDINGS OF THE SPIE: WINDOW AND DOME TECHNOLOGIES AND MATERIALS VI, vol. 3705, July 1999 (1999-07), pages 201-208, XP000965650 Bellingham, US**

**Description**

**BACKGROUND OF THE INVENTION**

Field of the Invention:

The present invention relates to optical systems. More specifically, the present invention relates to beam steering optical arrangements.

Description of the Related Art:

For many applications, there is a need for a compact, high performance optical arrangement with a steerable beam. Such applications include astronomy, medicine, weaponry and numerous other commercial, industrial and military applications. For such applications, beam steering is typically accomplished with a gimbaled arrangement. Typically, a lens or optical element is mounted to a gimbal. The gimbal is free to rotate about one to three axes. Hence, with a motor, the optical arrangement may be directed to a desired roll angle to steer the beam as necessary.

In J.P. Mills et al., Proc. of SPIE vol. 3705, p. 201-208 "conformal dome aberration correction with counter-rotating phase plates", an aberration correction for gimbals that point the line of sight through different parts of a dome is described.

Unfortunately, the gimbal and the actuators for same add to the cost and complexity of the system. In addition, for certain applications, it is desirable to effect beam steering with a more compact arrangement than would be afforded by a typical gimbaled arrangement.

Moreover, in many optical systems, there is a need to correct for optical aberrations. Such aberrations may result from distortion in an input aperture or from some other element in the optical train.

US-A-4,118,109 describes an optical apparatus for controlling the direction of a beam of optical radiation using two rotating prisms.

Hence, a need exists in the art for a compact, efficient, high performance optical arrangement with a mechanism for effecting beam steering and aberration correction.

**SUMMARY OF THE INVENTION**

The need in the art is addressed by the steerable optical arrangement of the present invention according to claim 1, and by the method according to claim 13. The inventive arrangement includes a first prism mounted for rotation about an optical axis and a second prism mounted for rotation about the optical axis. In accordance with the inventive teachings, the first prism and/or the second prism have at least one surface contoured to correct for optical aberration.

In the illustrative embodiment, the first and second prisms are Risley prisms. In addition, the illustrative implementation includes a first motor arrangement for rotating the first prism about the optical axis and a second motor arrangement for rotating the second prism about the optical axis. A controller is provided for activating the first and second motors to steer the beam at an angle $\phi$ and nod the beam at an angle $\theta$.

At least one surface of at least one prism is contoured to correct for astigmatism, coma, trefoil, oblique and/or focus. The contour is effected by laser etching, micro-machining or optical thin-film coating of the prisms in the manner disclosed herein.

**BRIEF DESCRIPTION OF THE DRAWINGS**

Fig. 1 is a sectional side view of an optical arrangement constructed in accordance with the teachings of the present invention.

Fig. 2 is a simplified diagram of the optical arrangement of Fig. 1 with the front and back prisms being rotated to steer the beam at a nod angle of zero degrees.

Fig. 3 is a simplified diagram of the optical arrangement of Fig. 1 with the front and back prisms being rotated to steer the beam 26 at a nod angle of $\phi$ degrees.

Fig. 4 is a side view of a single wedge utilized in the optical arrangement of the present invention.

Fig. 5 is a diagram using vector notation to describe the line-of-sight of the optical arrangement of the present invention.

Fig. 6 is a diagram showing side views of the first and second prisms of the present invention.

Fig. 7 is a diagram showing side views of the first and second prisms of Fig. 1 with surface contours in accordance with the present teachings.

Figs. 8, 9, 10a and 10b are diagrams which illustrate conventions used to facilitate an understanding of the teachings provided herein.

Fig. 11 is a graph which illustrates that aberrations can be generated with counter-rotating phase plates.

## DESCRIPTION OF THE INVENTION

Illustrative embodiments and exemplary applications will now be described with reference to the accompanying drawings to disclose the advantageous teachings of the present invention.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

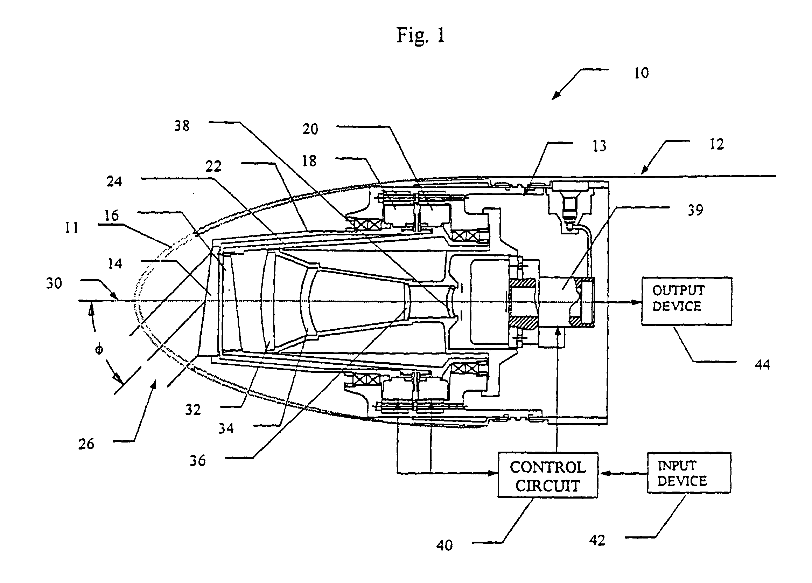

Fig. 1 is a sectional side view of an optical arrangement constructed in accordance with the teachings of the present invention. The arrangement 10 includes a housing 12 within which a set of wedge-shaped prisms 14 and 16 are disposed. The housing 12 is secured to a stable frame of reference suitable for a given application. Those skilled in the art will appreciate that the prisms are Risley prisms. The front and back prisms 14 and 16 are independently rotated by first and second motors 18 and 20 respectively. First and second conic-shaped cylinders 22 and 24 connect the first and second prisms 14 and 16 to the first and second motors 18 and 20, respectively.

As discussed more fully below, the rotation of the prisms is effective to steer a seeker line of sight (LOS) beam and thereby change the pointing or roll angle $\theta$ (not shown in Fig. 1) and the nod angle $\phi$ measured with respect to an optical axis 30. The roll angle $\theta$ and the nod angle $\phi$ are set by the user via an input device 42 and a control circuit 40. The input device 42 may be a microprocessor, ASIC, or other suitable device. The control circuit 40 drives the motors 18 and 20 to rotate the first and second prisms 14 and 16 to steer a beam 26 to the desired roll and nod angles. The LOS is directed by the prisms 14 and 16 to a spherical lens 32. The spherical lens 32 is part of an objective doublet along with an aspherical lens 34. The spherical lens 32 and the aspherical lens 34 are of conventional design and construction.

The aspherical lens 34 directs the LOS 26 along the optical path to an eyepiece consisting of first and second lenses 36 and 38. The eyepiece subsequently directs the field of view to an integrated detector assembly 39 and ultimately to an output device 44.

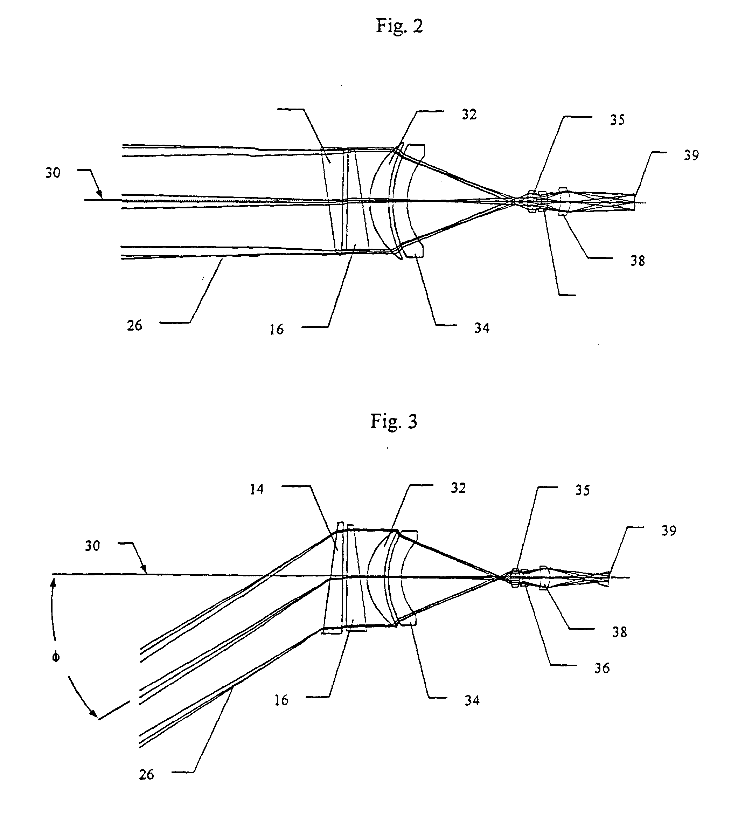

Fig. 2 is a simplified diagram of the optical arrangement of Fig. 1 with the front and back prisms being rotated to steer the LOS 26 at a nod angle of zero degrees.

Fig. 3 is a simplified diagram of the optical arrangement of Fig. 1 with the front and back prisms being rotated to steer the LOS 26 at a nod angle of $\phi$ degrees. As illustrated in Figs. 2 and 3, and in accordance with the present teachings, the line-of-sight of the optical system is stabilized and steered by counter-rotating the wedges 14 and 16. The roll and nod angles $\alpha$ and $\phi$ are related to relative angles of the wedges as follows.

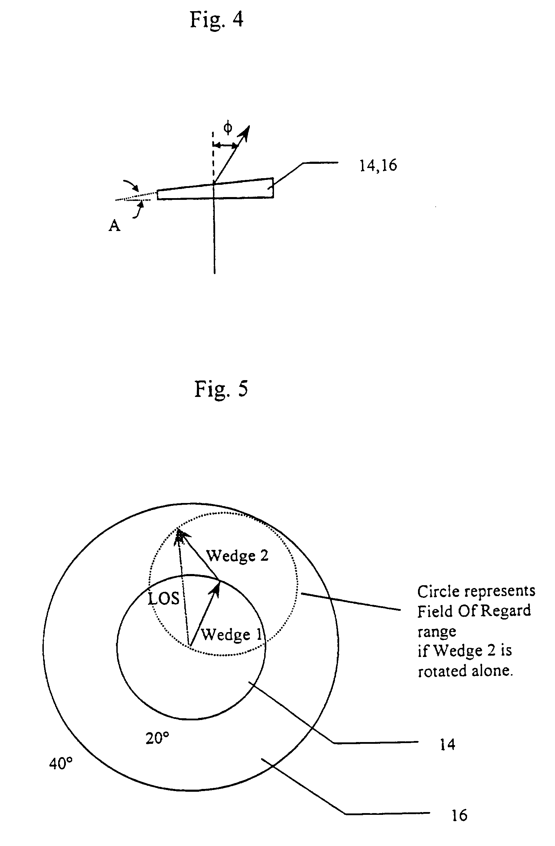

Fig. 4 is a side view of a single wedge 14 or 16. The following equations relate the wedge angle **A**, the deviation angle D and index of refraction 'n' as follows. Equation [1] relates deviation angle D and index of refraction (n) to wedge angle **A** for a single wedge for the case where the angle of incidence at the first surface is zero as illustrated in Fig. 4:

$$A = \arcsin(\sin(\phi)/(n-1)) \tag{1}$$

hence

$$\sin A = (\sin(\phi)/(n-1)) \tag{2}$$

and

$$(n-1)\sin A = \sin(\phi) \tag{3}$$

therefore

$$\phi = \arcsin((n-1)\sin A) \tag{4}$$

where D is the deviation angle, **A** is the wedge angle, and n is the index of refraction. Thus, a wedge made of germanium having an index of refraction of 4 and a wedge angle of 6.5° yields a deviation angle D of 20°. and a high dispersion (Abbe Number of 100). Likewise, a wedge made of silicon having an index of refraction of 3.4 and a wedge angle of 8.2° yields a deviation angle D of 20° and a low dispersion (Abbe Number of 225).

Fig. 5 is a diagram using vector notation to describe the line-of-sight of the optical arrangement of the present invention. As illustrated in Figs. 4 and 5, to achieve a nod motion, the wedges are counter-rotated equal and opposite directions. With two wedges 14 and 16, the deviation angle of each wedge $D_1$ and $D_2$ are related to the nod angle $\phi$ by equation [5] below:

$$\phi = 2 \sin \theta \sin^{-1} ((n-1) \sin A) \tag{5}$$

where $\theta$ is the rational angle of each wedge (in opposite direction).

The relationship between the wedge angles, indices of refraction, wedge roll angles and the nod and roll angles $\phi$ and $\alpha$ are disclosed in U. S. Patent Nos. 1,735,108 issued November 10, 1929 to H. N. Cox entitled OPTICAL ADJUSTING DEVICE; 3,253,525 issued May 31, 1966 to F. J. Merkel entitled VARIABLE OPTICAL WEDGE; 3,507,565 issued April 21, 1970 to L. W. Alvarez et al. ENTITLED VARIABLE-POWER LENS AND SYSTEM; 3,378,326 to Alvarez and 3,884,548 to issued May 20, 1975 to S. L. Linder entitled VARIABLE OPTICAL WEDGE FOR IMAGE STABLILIZATION AND OTHER PURPOSES.

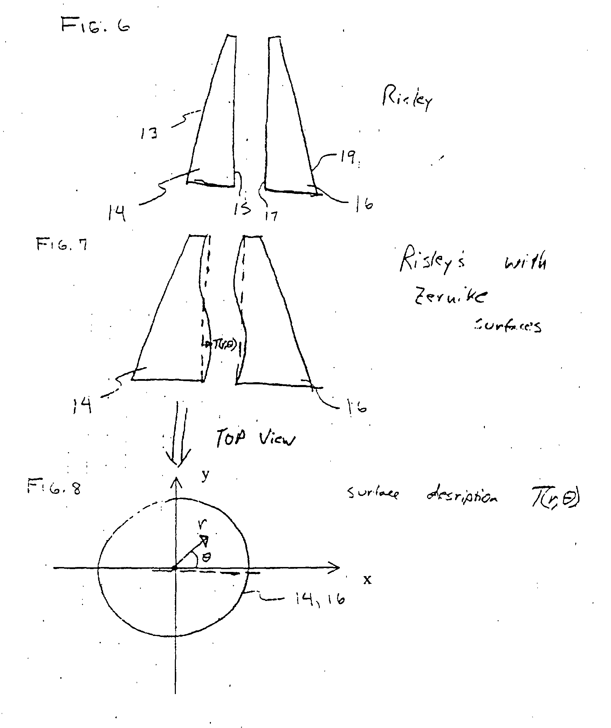

Fig. 6 is a diagram showing side views of the first and second prisms of the present invention. Fig. 7 is a diagram showing side views of the first and second prisms of Fig. 1 with surface contours in accordance with the present teachings. As illustrated in Figs. 6 and 7, each prism has a wedge or trapezoidal geometry from a side view. The first prism 14 has a first surface 13 and a second surface 15. The second prism 16 has a first surface 17 and a second surface 19. The second surface 15 of the first prism faces the first surface 17 of the second prism 16. In accordance with the present teachings, the second surface 15 of the first prism and the first surface 17 of the second prism 16 (hereinafter the 'correction surfaces') are contoured to correct for optical aberrations such as astigmatism, coma, trefoil, oblique and focus. Those skilled in the art will appreciate that the correction surfaces may be etched in accordance with the surface descriptions provided below using photolithography, laser etching, micro-machining, optical thin-films or other any suitable technique known in the art.

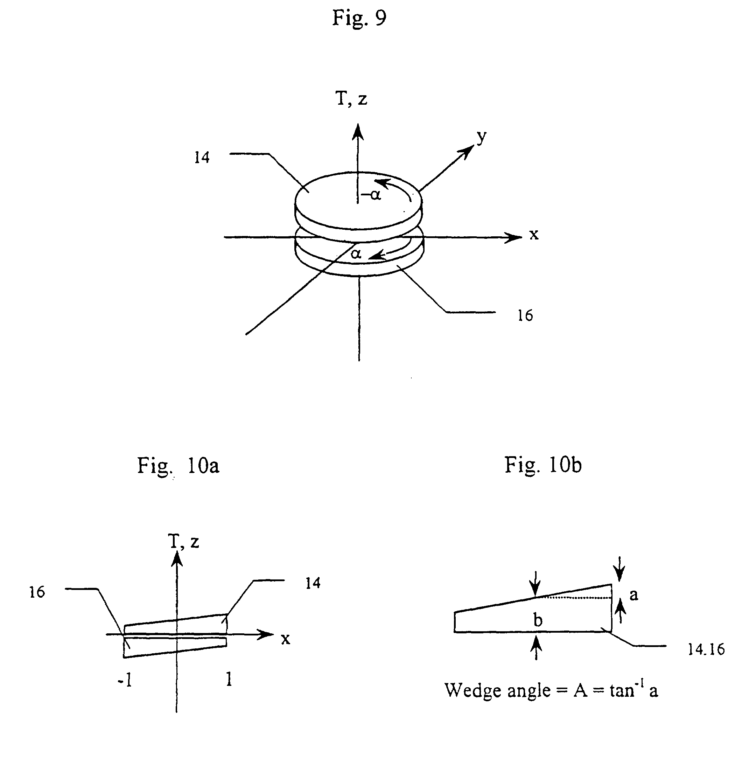

Figs. 8, 9, 10a and 10b are diagrams which illustrate conventions used to facilitate an understanding of the teachings provided herein. Table I below is a surface deformation table with provides surface descriptions which may be used to correct for the optical aberrations mentioned above along with tilt or nod.

Table I

| Wavefront Deformation | Surface Description | Resulting OPD(R,$\theta$,$\alpha$) after both prisms counter-rotate by $\alpha$ | Fringe Zernike |
|---|---|---|---|
| Tilt in y | $ar \cos \theta$ | $-2a(n-1)\sin\alpha\, r \sin\theta$ | 3 |
| Astigmatism | $b-(r^2)\cos 2\theta$ | $-2b(n-1)\sin 2\alpha\, r^2\sin 2\theta$ | 6 |
| Coma | $c(3r^3-2r) \cos\theta$ | $-c2(n-1)\sin\alpha\, (3r^3-2r)\sin \theta$ | 8 |
| Trefoil | $d(r^3) \sin 3\theta$ | $-2c(n-1)\sin 3\alpha\, r^3 \cos 3\theta$ | 10 |

The Zernike terms Z4, Z5, Z7 and Z13 can be generated along with Z3, Z6, Z8 and Z10, respectively, by rotating both plates together.

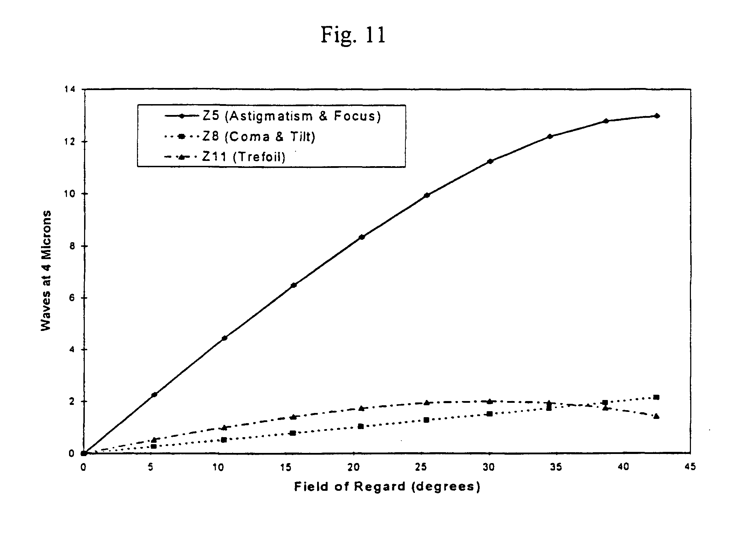

Fig. 11 is a graph which illustrates that aberrations can be generated with counter-rotating phase plates.

Thus, the present invention has been described herein with reference to a particular embodiment for a particular application. Those having ordinary skill in the art and access to the present teachings will recognize additional modifications applications and embodiments within the scope thereof.

It is therefore intended by the appended claims to cover any and all such applications, modifications and embodiments within the scope of the present invention.

Accordingly,

## Claims

**1.** A steerable optical arrangement (10) for steering a seeker line of sight, the optical arrangement (10) comprising a straight optical axis (30) forming an optical path to an eyepiece (36, 38), a first prism (14) mounted for rotation about the optical axis (30) and a second prism (16) mounted for rotation about the same optical axis (30); wherein said first prism (14) and/or said second prism (16) have at least one surface (15/17) contoured to correct for optical aberration.

2. The steerable optical arrangement (10) of the preceding claim, including first means (18) for rotating said first prism (14) about said optical axis (30).

3. The steerable optical arrangement (10) of the preceding claim, including second means (20) for rotating said second prism (16) about said optical axis (30).

4. The steerable optical arrangement (10) of the preceding claim including means (40) for controlling said first means (18) and said second means (20).

5. The steerable optical arrangement (10) of the preceding claim wherein the controlling means (40) controls said first means (18) and said second means (20) to steer a beam at an angle $\phi$.

6. The steerable optical arrangement (10) of either of the two preceding claims wherein the controlling means (40) controls said first means and said second means to nod said beam at an angle $\theta$.

7. The steerable optical arrangement (10) of any of the three preceding claims wherein the controlling means (40) controls rotation of said first prism (14) relative to said second prism (16).

8. The steerable optical arrangement (10) of any of the preceding claims wherein said first prism (14) is a Risley prism.

9. The steerable optical arrangement (10) of any of the preceding claims wherein said second prism (16) is a Risley prism.

10. The steerable optical arrangement (10) of any of the preceding claims wherein said optical aberration is any non-rotationally symmetric aberration.

11. The steerable optical arrangement (10) of the preceding claim, wherein said optical aberration is astigmatism, coma, trefoil or tilt.

12. The steerable optical arrangement (10) of any of the preceding claims further comprising a housing (12) within which the first prism (14) and the second prism (16) are disposed.

13. A method using the steerable optical arrangement (10) of any of the preceding claims for steering a seeker line of sight (26), said method including the step of rotating said first prism (14) about said optical axis (30) and rotating said second prism (16) about said optical axis (30) to steer said seeker line of sight (26) at an angle $\phi$ and to nod said line of sight at an angle $\theta$.

14. A method as set forth in the preceding claim wherein the seeker line of sight (26) is directed by the prisms (14, 16) to a spherical lens 32 which is part of an objective doublet along with an aspherical lens (34) and wherein the aspherical lens (34) directs the line of sight (26) along the optical path to the eyepiece (36, 38).

15. A method as set forth in the preceding claim wherein the eyepiece (36, 38) directs the field of view to an integrated detector assembly (39) and to an output device (44).

## Patentansprüche

1. Ablenkbare optische Anordnung (10) zum Ablenken einer Suchersichtlinie, wobei die optische Anordnung (10) eine gerade optische Achse (30), die einen optischen Weg zu einem Okular (36, 38) bildet, ein um die optische Achse (30) drehbar angebrachtes erstes Prisma (14) und ein um die selbe optische Achse (30) drehbar angebrachtes zweites Prisma (16) aufweist, wobei das erste Prisma (14) und/oder das zweite Prisma (16) zumindest eine Oberfläche (15/17) aufweisen, die zum Korrigieren einer optischen Aberration konturiert sind.

**2.** Ablenkbare optische Anordnung (10) nach dem vorhergehenden Anspruch, mit ersten Mitteln (18) zum Drehen des ersten Prismas (14) um die optische Achse (30).

**3.** Ablenkbare optische Anordnung (10) nach dem vorhergehenden Anspruch, mit zweiten Mitteln (20) zum Drehen des zweiten Prismas (16) um die optische Achse (30).

**4.** Ablenkbare optische Anordnung (10) nach dem vorhergehenden Anspruch, mit Mitteln (40) zum Steuern der ersten Mittel (18) und der zweiten Mittel (20).

**5.** Ablenkbare optische Anordnung (10) nach dem vorhergehenden Anspruch, wobei die Steuermittel (40) die ersten Mittel (18) und die zweiten Mittel (20) steuern, um einen Strahl unter einem Winkel $\phi$ abzulenken.

**6.** Ablenkbare optische Anordnung (10) nach einem der beiden vorhergehenden Ansprüche, wobei die Steuermittel (40) die ersten Mittel und die zweiten Mittel steuern, um den Strahl unter einem Winkel $\theta$ zu neigen.

**7.** Ablenkbare optische Anordnung (10) nach irgendeinem der drei vorhergehenden Ansprüche, wobei die Steuermittel (40) die Drehung des ersten Prismas (14) relativ zu dem zweiten Prisma (16) steuern.

**8.** Ablenkbare optische Anordnung (10) nach irgendeinem der vorhergehenden Ansprüche, wobei das erste Prisma (14) ein Risley-Prisma ist.

**9.** Ablenkbare optische Anordnung (10) nach irgendeinem der vorhergehenden Ansprüche, wobei das zweite Prisma (16) ein Risley-Prisma ist.

**10.** Ablenkbare optische Anordnung (10) nach irgendeinem der vorhergehenden Ansprüche, wobei die optische Aberration eine beliebige nicht-rotationssymmetrische Aberration ist.

**11.** Ablenkbare optische Anordnung (10) nach dem vorhergehenden Anspruch, wobei die optische Aberration Astigmatismus, Koma, Dreiblattfehler oder Verkippung ist.

**12.** Ablenkbare optische Anordnung (10) nach irgendeinem der vorhergehenden Ansprüche, weiterhin mit einem Gehäuse (12), in dem das erste Prisma (14) und das zweite Prisma (16) angeordnet sind.

**13.** Verfahren zum Verwenden der ablenkbaren optischen Anordnung (10) nach irgendeinem der vorhergehenden Ansprüche zum Ablenken einer Suchersichtlinie (26), wobei das Verfahren den Schritt eines Drehens des ersten Prismas (14) um die optische Achse (30) und Drehens des zweiten Prismas (16) um die optische Achse (30) umfasst, um die Suchersichtlinie (26) unter einem Winkel $\phi$ abzulenken und die Sichtlinie unter einem Winkel $\theta$ zu neigen.

**14.** Verfahren nach dem vorhergehenden Anspruch, wobei die Suchersichtlinie (26) mittels der Prismen (14, 16) auf eine sphärische Linse (32) gerichtet wird, die Teil eines Doppelobjektivs zusammen mit einer asphärischen Linse (34) ist, und wobei die asphärische Linse (34) die Sichtlinie (36) entlang des optischen Weges zu dem Okular (36, 38) richtet.

**15.** Verfahren nach dem vorhergehenden Anspruch, wobei das Okular (36, 38) das Gesichtsfeld auf eine integrierte Detektoranordnung (39) und eine Ausgabeeinrichtung (44) richtet.

**Revendications**

**1.** Agencement optique orientable (10) pour l'orientation d'un champ de recherche en visibilité directe, l'agencement optique (10) comprenant un axe optique direct (30) formant un trajet optique jusqu'à un oculaire (36, 38), un premier prisme (14) monté de façon à pouvoir tourner autour de l'axe optique (30), et un second prisme (16) monté de façon à pouvoir tourner autour du même axe optique (30) ; dans lequel ledit premier prisme (14) et/ou ledit second prisme (16) a ou ont au moins une surface (15 / 17) profilée pour corriger l'aberration optique.

**2.** Agencement optique orientable (10) selon la revendication précédente, comprenant un premier moyen (18) pour faire tourner ledit premier prisme (14) autour dudit axe optique (30).

**3.** Agencement optique orientable (10) selon la revendication précédente, comprenant un second moyen (20) pour faire tourner ledit second prisme (16) autour dudit axe optique (30).

**4.** Agencement optique orientable (10) selon la revendication précédente, comprenant un moyen (40) pour commander ledit premier moyen (18) et ledit second moyen (20).

**5.** Agencement optique orientable (10) selon la revendication précédente, dans lequel le moyen de commande (40) commande ledit premier moyen (18) et ledit second moyen (20) pour orienter un faisceau selon un angle $\phi$.

**6.** Agencement optique orientable (10) selon l'une des deux revendications précédentes, dans lequel le moyen de commande (40) commande ledit premier moyen et ledit second moyen pour incliner ledit faisceau selon un angle $\theta$.

**7.** Agencement optique orientable (10) selon l'une quelconque des trois revendications précédentes, dans lequel le moyen de commande (40) commande la rotation dudit premier prisme (14) par rapport audit second prisme (16).

**8.** Agencement optique orientable (10) selon l'une quelconque des revendications précédentes, dans lequel ledit premier prisme (14) est un prisme de Risley.

**9.** Agencement optique orientable (10) selon l'une quelconque des revendications précédentes, dans lequel ledit second prisme (16) est un prisme de Risley.

**10.** Agencement optique orientable (10) selon l'une quelconque des revendications précédentes, dans lequel ladite aberration optique est une aberration symétrique quelconque, non rotationnelle.

**11.** Agencement optique orientable (10) selon la revendication précédente, dans lequel ladite aberration optique est un astigmatisme, un comma, un trilobe ou une inclinaison.

**12.** Agencement optique orientable (10) selon l'une quelconque des revendications précédentes, comprenant en outre un carter (12) dans lequel sont disposés le premier prisme (14) et le second prisme (16).

**13.** Procédé d'utilisation de l'agencement optique orientable (10) selon l'une quelconque des revendications précédentes pour l'orientation d'un champ de recherche en visibilité directe (26), ledit procédé comprenant l'étape consistant à faire tourner ledit premier prisme (14) autour dudit axe optique (30) et à faire tourner ledit second prisme (16) autour dudit axe optique (30), afin d'orienter ledit champ de recherche en visibilité directe (26) selon un angle $\phi$ et d'incliner ledit champ en visibilité directe selon un angle $\theta$.

**14.** Procédé selon la revendication précédente, dans lequel le champ de recherche en visibilité directe (26) est dirigé par les prismes (14, 16) vers une lentille sphérique (32), qui fait partie d'un objectif doublet en association avec une lentille asphérique (34), et dans lequel la lentille asphérique (34) dirige le champ en visibilité directe (26) suivant le trajet optique vers l'oculaire (36, 38).

**15.** Procédé selon la revendication précédente, dans lequel l'oculaire (36, 38) dirige le champ de visibilité vers un ensemble de détection intégré (39) et vers un dispositif de sortie (44).

Fig. 1

Fig. 2

Fig. 3

## Fig. 4

14,16

## Fig. 5

Circle represents
Field Of Regard
range
if Wedge 2 is
rotated alone.

14

16

FIG. 6

Risley

13
19
14
15  17
16

FIG. 7

Risley's with
Zernike
surfaces

T(r,θ)

14
16

TOP View

FIG. 8

Surface description $T(r,\theta)$

y

r
θ

x

14, 16

Fig. 9

Fig. 10a

Fig. 10b

Wedge angle $= A = \tan^{-1} a$

Fig. 11